# EUROPÄISCHE PATENTANMELDUNG

(11) **EP 4 084 202 A1**
(43) Veröffentlichungstag der Anmeldung: **02.11.2022**
(21) Anmeldenummer: 22020039.8
(22) Anmeldetag: 08.02.2022
(51) Int. Cl.: H01M 50/213, H01M 50/502, H01M 50/503

(54) **BATTERIEZELLENVERBINDUNGSEINRICHTUNG, BATTERIEMODUL, BATTERIEVORRICHTUNG MIT WENIGSTENS ZWEI BATTERIEMODULEN UND VERFAHREN ZUM HERSTELLEN EINER BATTERIEVORRICHTUNG**

(30) Priorität: 28.04.2021 DE 102021110819
(71) Anmelder: Dr. Ing. h.c. F. Porsche Aktiengesellschaft, 70435 Stuttgart (DE)
(72) Erfinder: Renz, Fadi, 70806 Kornwestheim (DE); Kohel, Martin, 15300 Praha 5 (CZ)

(57) **Zusammenfassung**

Es wird ein Batteriezellenverbindungseinrichtung (5) zum elektrisch leitenden Verbinden mit einer einseitig gepolten Batteriezelle (1) mit einem ersten Pol (3) und einem zweiten Pol (2) bereitgestellt, wobei die Batteriezellenverbindungseinrichtung (5) aufweist: einen elektrisch leitenden Rahmen (7) mit einer Aufnahme (8) zur Aufnahme eines Abschnitts der einseitig gepolten Batteriezelle (1) mit deren ersten und zweiten Pol (3, 2), wobei der Rahmen (7) mit dem ersten Pol (3) der Batteriezelle (1) elektrisch leitend verbindbar ausgebildet ist und einen Zugang (11) zum elektrischen Kontaktieren des zweiten Pols (2) der Batteriezelle (1) aufweist, ein elektrisch leitendes Laschenelement (12), welches an dem Rahmen (7) befestigt und gegenüber dem Rahmen (7) elektrisch isoliert ist, wobei das Laschenelement (12) derart ausgebildet ist, den zweiten Pol (2) über den Zugang (11) des Rahmens (7) mit einem ersten Pol einer weiteren Batteriezelle und insbesondere eines Rahmens einer weiteren Batteriezellenverbindungseinrichtung elektrisch leitend zu verbinden.

## Beschreibung

Die vorliegende Erfindung betrifft eine Batteriezellenverbindungseinrichtung zum Verbinden von Batteriezellen, sowie ein Batteriemodul mit der Batteriezellenverbindungseinrichtung und einer einseitig gepolten Batteriezelle, insbesondere einer einseitig gepolten Hochvolt-Batteriezelle, eine Batterievorrichtung mit wenigstens zwei solchen Batteriemodulen und ein Verfahren zur Herstellung einer Batterievorrichtung aus mehreren Batteriemodulen. Die Batterievorrichtung ist dabei insbesondere eine Antriebsbatterievorrichtung zum Antrieb eines Elektro-Kraftfahrzeugs oder eines Hybrid-Kraftfahrzeugs mit einem Elektromotor und einem Verbrennungsmotor.

In der DE 10 2014 222 552 A1 ist eine Lithium-Ionen-Batteriezelle offenbart, die mindestens eine elektrochemische Komponente und mindestens eine Betriebsvorrichtung enthält, wobei die mindestens eine elektrochemische Komponente und die mindestens eine Betriebsvorrichtung reversibel miteinander verbindbar und reversibel voneinander lösbar sind.

Des Weiteren offenbart die DE 10 2018 222 458 A1 eine Kontaktierungsvorrichtung für eine Batteriezelle für eine Batterie eines Kraftfahrzeugs, aufweisend ein aus einem elektrisch isolierenden Material ausgebildetes Gehäuse und eine von dem Gehäuse zumindest teilweise umfasste Verschaltungseinrichtung.

Weiter ist aus der WO 2020/094218 A1 ein Zellverbinder zum elektrisch leitenden Verbinden von Rundzellen einer Batterie für ein Kraftfahrzeug bekannt. Der Zellverbinder umfasst mehrere elektrisch leitende Kontaktelemente zum stirnseitigen Verbinden von jeweils zwei der Rundzellen in Reihenschaltung, wobei die Kontaktelemente jeweils eine bodenseitige Kontaktfläche zum Herstellen einer stoffschlüssigen Verbindung mit einer jeweiligen Zellkappe der Rundzellen und Federarme zum Herstellen einer kraftschlüssigen Verbindung mit einem jeweiligen Zellbecher der Rundzellen aufweisen. Zudem umfasst der Zellverbinder mehrere elektrisch leitende Verbindungsstege, welche die gruppiert angeordneten Kontaktelemente miteinander verbinden. Die Kontaktelemente und Verbindungsstege sind dabei aus einem gemeinsamen Stanzbiegeteil hergestellt.

Aufgabe der vorliegenden Erfindung ist die Bereitstellung einer verbesserten Batteriezellenverbindungseinrichtung, welche insbesondere ein Verbinden von Batteriezellen nach einem Baukastenprinzip zu einer Batterievorrichtung erlaubt.

Die Aufgabe wird mittels einer Batteriezellenverbindungseinrichtung nach Patentanspruch 1, durch ein Batteriemodul gemäß Patentanspruch 7, einer Batterievorrichtung gemäß Anspruch 9 und einem Verfahren zum Herstellen einer Batterievorrichtung gemäß Anspruch 12gelöst

Erfindungsgemäß wird eine Batteriezellenverbindungseinrichtung zum elektrisch leitenden Verbinden mit einer einseitig gepolten Batteriezelle mit einem ersten Pol und einem zweiten Pol bereitgestellt, wobei die Batteriezellenverbindungseinrichtung aufweist:
einen elektrisch leitenden Rahmen mit einer Aufnahme zur Aufnahme eines Abschnitts der einseitig gepolten Batteriezelle mit deren ersten und zweiten Pol, wobei der Rahmen mit dem ersten Pol der Batteriezelle elektrisch leitend verbindbar ausgebildet ist und einen Zugang zum elektrischen Kontaktieren des zweiten Pols der Batteriezelle aufweist,
ein elektrisch leitendes Laschenelement, welches an dem Rahmen befestigt und gegenüber dem Rahmen elektrisch isoliert ist, wobei das Laschenelement derart ausgebildet ist, den zweiten Pol über den Zugang des Rahmens mit einem ersten Pol einer weiteren Batteriezelle und insbesondere eines Rahmens einer weiteren Batteriezellenverbindungseinrichtung elektrisch leitend zu verbinden.

Die Batteriezellenverbindungseinrichtung hat den Vorteil, dass durch sie ein Batteriemodul sehr einfach aus der Batteriezellenverbindungseinrichtung und einer entsprechenden einseitig gepolten Batteriezelle hergestellt und anschließend im Baukastenprinzip zu einer Batterievorrichtung zusammengestellt werden kann mit seriellen und parallelen Verschaltungen der einzelnen Batteriemodule. Dadurch ist es möglich, Batterievorrichtungen im Baukastenprinzip herzustellen, bei denen ein belastbarer Bauraum bei einem Fahrzeug eruiert werden kann, und das bereits in einer frühen Konzeptphase. Dadurch können Entwicklungskosten eingespart werden. Kostenaufwendige und projektspezifische Batteriezellen-Kontaktierungslösungen können reduziert oder sogar wegfallen.

Weiter wird erfindungsgemäß ein Batteriemodul mit einer derartigen Batteriezellenverbindungseinrichtung und einer einseitig gepolten Batteriezelle mit einem ersten Pol und einem zweiten Pol bereitgestellt, wobei die Batteriezelle mit dem Abschnitt mit den beiden Polen in der Aufnahme des Rahmens der Batteriezellenverbindungseinrichtung aufgenommen und der Rahmen den ersten Pol elektrisch kontaktiert und das Laschenelement den zweiten Pol elektrisch kontaktiert.

Die Fertigungszeit und das Risiko von Ausschuss bei der kritischen Batteriezellenkontaktierung in der Batterieproduktion und dem Zusammenbau können erheblich reduziert werden. Die Toleranzen der Batteriezellen können durch die Modulbauweise eingefangen werden. Die Batteriezellenhersteller können die Toleranzen der Batteriezellen auf den Baukasten aus Batteriemodulen anpassen. Die Stromtragfähigkeit, thermische Auslegung, Luft- und Kriechstrecken können mittels der Batteriezellenverbindungseinrichtung und der daraus resultierenden Batteriemodule sichergestellt bzw. standardisiert werden und müssen nicht immer wieder neu berechnet werden. Dies resultiert ebenfalls in Einsparungen bei den Entwicklungskosten.

Außerdem wird erfindungsgemäß eine Batterievorrichtung bereitgestellt, welche mehrere der Batteriemodule und wenigstens ein elektrisch isolierendes Verbindungselement aufweist, wobei das elektrisch isolierende Verbindungselement wenigstens zwei der Batteriemodule derart miteinander verbindet, dass die Rahmen der beiden Batteriemodule voneinander elektrisch isoliert sind, wobei das Laschenelement des einen Batteriemoduls dabei mit seinem äußeren Ende den Rahmen des anderen Batteriemoduls elektrisch kontaktiert, zur Bereitstellung einer seriellen Verschaltung der beiden Batteriemodule.

Mittels des Aufbaus der Batterievorrichtung aus Batteriemodulen kann bereits in einer frühen Konzeptphase ein belastbarer Bauraum bestimmt werden.

Des Weiteren wird erfindungsgemäß Verfahren zur Herstellung einer Batterievorrichtung, mit den Schritten bereitgestellt:
Bereitstellen von mehreren Batteriezellenverbindungseinrichtungen,
Bereitstellen von den Batteriezellenverbindungseinrichtungen zugeordneten, einseitig gepolten Batteriezellen,
Bereitstellen von wenigstens einem elektrisch isolierenden Verbindungselement,
Herstellen eines jeweiligen Batteriemoduls durch Aufnehmen der jeweiligen Batteriezelle mit dem Abschnitt mit den beiden Polen in der Aufnahme des Rahmens der zugeordneten Batteriezellenverbindungseinrichtung,
elektrisches Verbinden des ersten Pols mit dem Rahmen,
elektrisches Verbinden des Laschenelements mit dem zweiten Pol, wobei das Laschenelement an dem zweiten Pol vorzugsweise angeschweißt wird,
Bereitstellen wenigstens einer seriellen Verschaltung von wenigstens zwei Batteriemodulen durch Vorsehen des elektrisch isolierenden Verbindungselements zwischen den wenigstens zwei Batteriemodulen und elektrisch leitendes Verbinden des Laschenelements des einen Batteriemoduls mit dem Rahmen des anderen Batteriemoduls, und/oder
Bereitstellen wenigstens einer parallelen Verschaltung von wenigstens zwei Batteriemodulen durch eine elektrisch leitende Befestigung der beiden Rahmen der Batteriemodule aneinander.

In einer Ausführungsform ist der Rahmen derart ausgebildet, dass er an wenigstens einer oder an wenigstens zwei Seiten, z.B. wenigstens zwei einander gegenüberliegenden Seiten, mit einem weiteren Rahmen einer Batteriezellenverbindungseinrichtung elektrisch leitenden verbindbar ist. Dadurch kann das Batteriemodul sehr einfach mit weiteren Batteriemodulen verschaltet, insbesondere parallel verschaltet werden. Der Rahmen ist beispielsweise derart ausgebildet an derjeweiligen Seite mit dem weiteren Rahmen mittels Verschrauben, Verstiften, Vernieten, Verschweißen, Zusammenstecken, Verrasten und/oder Verkleben verbindbar zu sein, insbesondere elektrisch leitend verbindbar zu sein.

In einer anderen Ausführungsform weist der Rahmen zur Befestigung eines Weiteren Rahmens an der jeweiligen Seite einen Befestigungsabschnitt auf mit dem der Rahmen mit dem anderen Rahmen zusammensteckbar und vorzugsweise zusätzlich verschraubbar, verstiftbar, vernietbar, verschweißbar, verrastbar und/oder verklebbar ist. Der Befestigungsabschnitt weist zum Verstiften, Vernieten oder Verschrauben z.B. eine Bohrung oder Gewindebohrung auf. Solche Befestigungsabschnitte bilden einfache sich wiederholende Verbindungsmöglichkeiten der Batteriemodule untereinander, und damit das Realisieren eines Baukastenprinzips. Darüber hinaus können die Befestigungsabschnitte beispielsweise außerdem zum Befestigen eines elektrisch isolierenden Verbindungselements genutzt werden, welches bei einer seriellen Verschaltung eingesetzt wird. Dadurch können Kosten reduziert werden.

In einer weiteren Ausführungsform weist der Befestigungsabschnitt einen abgestuften Vorsprung auf, welcher seitlich an dem Rahmen vorsteht und in einer zu dem abgestuften Vorsprung korrespondierenden Aussparung des anderen Rahmens aufnehmbar oder einsteckbar ist. Ebenso kann der Befestigungsabschnitt eine an der Ober- oder Unterseite des Rahmens ausgebildete Aussparung aufweisen, in welche ein dazu korrespondierender, abgestufter Vorsprung des anderen Rahmens aufnehmbar oder einsteckbar ist. Diese Befestigungsabschnitte ermöglichen eine besonders stabile Befestigung der Rahmen aneinander.

Gemäß einer Ausführungsform weist der Rahmen eine Zugangsöffnung an einem oberen Ende der Aufnahme auf, als Zugang zum elektrischen Kontaktieren des zweiten Pols der in der Aufnahme aufnehmbaren Batteriezelle. Das Laschenelement weist dabei ein inneres Ende auf, mit dem das Laschenelement elektrisch leitenden mit dem zweiten Pol durch die Zugangsöffnung verbindbar ist, insbesondere an dem zweiten Pol anschweißbar ist. Des Weiteren weist das Laschenelement ein äußeres Ende auf, mit dem das Laschenelement seitlich über den Rahmen nach außen vorsteht zur elektrischen Kontaktierung mit einem ersten Pol einer weiteren Batteriezelle und insbesondere eines mit dem Rahmen verbundenen weiteren Rahmens einer weiteren Batteriezellenverbindungseinrichtung. Das Laschenelement hat den Vorteil, dass es eine sehr einfache und zuverlässige elektrische Verbindung bereitstellt.

In einer anderen Ausführungsform ist die Aufnahme als eine Aufnahmehülse ausgebildet für eine formschlüssige und/oder kraftschlüssige Aufnahme des Abschnitts der einseitig gepolten Batteriezelle mit deren ersten und zweiten Pol. Die Aufnahmehülse ist vorzugsweise an dem Umfang der Batteriezelle mit dem ersten Pol, insbesondere einem ringförmigen ersten Pol, zusätzlich verschweißbar, zur Bereitstellung einer definierten elektrisch leitenden Verbindung des Rahmens mit dem ersten Pol. Dadurch ist keine Schweißung an einer Bördelung einer Zellkanne erforderlich und die Prozesssicherheit kann erhöht werden.

In einer weiteren Ausführungsform ist die einseitig gepolte Batteriezelle eine einseitig gepolte Batterierundzelle, insbesondere eine einseitig gepolte Hochvolt-Batterierundzelle. Solche Hochvolt-Batteriezellen werden für Antriebsbatterievorrichtungen beispielsweise von Elektrofahrzeugen eingesetzt. Der erste Pol der Batteriezelle kann ringförmig ausgebildet und innerhalb des ringförmigen ersten Pols der zweite Pol vorgesehen sein, wobei der erste und der zweite Pol voneinander elektrisch isoliert sind. Dabei kann der erste Pol ein Minus-Pol und der zweite Pol ein Plus-Pol oder der erste Pol ein Plus-Pol und der zweite Pol ein Minus-Pol sein.

In einer Ausführungsform weist das elektrisch isolierende Verbindungselement einen Steg auf, welcher zwischen den beiden Rahmen der seriell miteinander verschaltenden Batteriemodule angeordnet ist und diese voneinander trennt und dadurch voneinander elektrisch isoliert. Der Steg kann durch das Laschenelement eines Batteriemoduls leicht überbrückt werden, um mittels des Laschenelements eine serielle Verschaltung von zwei Batteriemodulen bereitzustellen.

In einer weiteren Ausführungsform weist das Verbindungselement an seinen beiden Enden auf beiden Seiten des Stegs einen zu dem Befestigungsabschnitt des jeweiligen an dem Steg vorgesehenen Rahmens korrespondierenden Befestigungsabschnitt auf. Dies hat den Vorteil, dass für das Verbindungselement keine eigene Befestigung an dem Rahmen eines Batteriemoduls vorgesehen werden muss. Stattdessen können für die Befestigung des Verbindungselements bestehenden Befestigungsabschnitte der Rahmen der Batteriemodule genutzt werden.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung und den beiliegenden Zeichnungen.
Figur 1 zeigt eine schematische Schnittansicht einer einseitig gepolten Batteriezelle,
Figur 2 zeigt ein Ausführungsbeispiel eines erfindungsgemäßen Batteriemoduls in einer Explosionsdarstellung, welches aus der Batteriezelle gemäß Figur 1 und einer Batteriezellenverbindungseinrichtung besteht,
Figur 3 zeigt eine Draufsicht auf das Batteriemodul gemäß Figur 2,
Figur 4 zeigt eine Perspektivansicht des Batteriemoduls gemäß der Figuren 2 und 3,
Figur 5 zeigt eine Perspektivansicht eines Ausführungsbeispiels einer Batterievorrichtung, welche in einem Baukastenprinzip aus mehreren Batteriemodulen gemäß der Figuren 2 bis 4 zusammengesetzt ist,
Figur 6 zeigt eine Draufsicht der Batterievorrichtung gemäß Figur 5,
Figur 7 zeigt eine Draufsicht auf ein weiteres Ausführungsbeispiel einer Batterievorrichtung mit mehreren Batteriemodulen gemäß der Figuren 2 bis 4,
Figur 8 zeigt eine Draufsicht auf ein anderes Ausführungsbeispiel einer Batterievorrichtung mit mehreren Batteriemodulen gemäß der Figuren 2 bis 4,
Figur 9 zeigt einen Ausschnitt einer Batteriezelle mit einer Zellkanne mit einer Bördelung, und
Figur 10 zeigt einen Ausschnitt zweier miteinander verbundener Batteriezellen mit einer jeweiligen Zellkanne mit einer Bördelung.

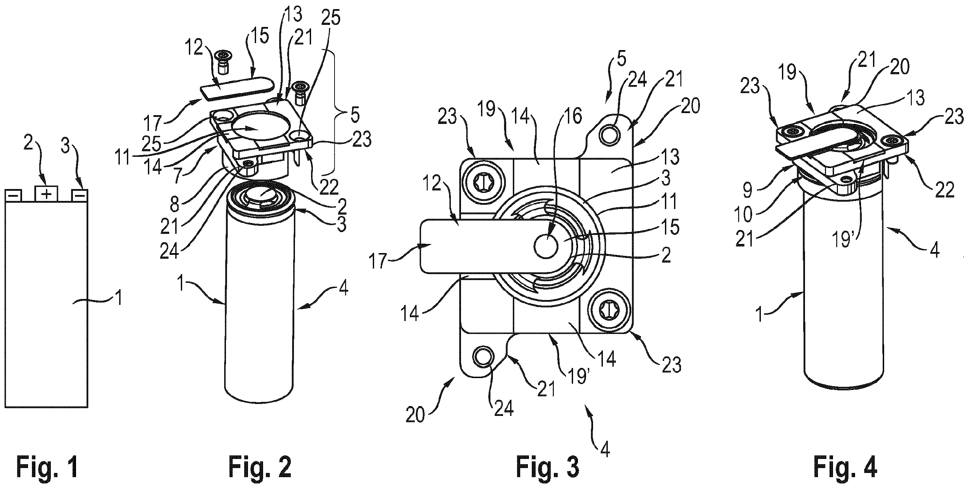

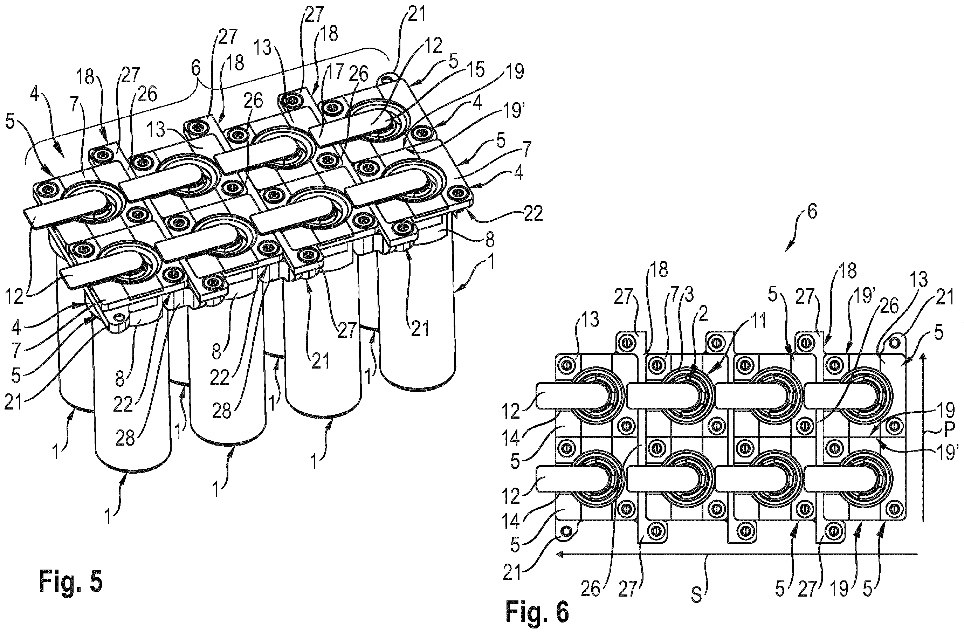

In Figur 1 ist eine stark vereinfachte, rein schematische Schnittansicht einer einseitig gepolten Batteriezelle 1, beispielsweise einer einseitig gepolten Hochvoltbatteriezelle, für eine Batterievorrichtung gezeigt. Solche Batteriezellen 1 werden, wie im Folgenden erläutert wird, mit einer Batteriezellenverbindungseinrichtung verbunden zum Bereitstellen eines jeweiligen Batteriemoduls. Das Batteriemodul kann mit weiteren solcher Batteriemodule in einer Art Baukastensystem zu einer gewünschten Batterievorrichtung zusammengeschaltet werden, wie in Ausführungsbeispielen von Batterievorrichtungen in den Figuren 5 bis 8 gezeigt ist. Eine solche Batterievorrichtung aus mehreren miteinander seriell und/oder parallel verschalteten Batteriemodulen kann beispielsweise als eine Antriebsbatterievorrichtung zum Antrieb eines Elektrofahrzeugs vorgesehen werden. Solche Antriebsbatterievorrichtungen werden auch als Hochvoltbatterievorrichtungen bezeichnet und dienen als mobiler elektrischer Energiespeicher, insbesondere zum Antrieb von Elektrofahrzeugen und besonders zum Versorgen der Elektromotoren der Elektrofahrzeuge mit Energie.

Die Batteriezelle 1, beispielsweise in Form einer einseitig gepolten Batterierundzelle wie in Figur 1 gezeigt, weist an einer Seite oder hier Stirnseite einen Plus-Pol 2 und einen Minus-Pol 3 auf. Der Minus-Pol 3 ist bei der gezeigten einseitig gepolten Batterierundzelle dabei beispielsweise ringförmig ausgebildet, wobei im Inneren des ringförmigen Minus-Pols 3 der Plus-Pol 2 angeordnet ist. Der Minus-Pol 3 und der Plus-Pol 2 sind voneinander elektrisch isoliert. Grundsätzlich kann auch umgekehrt der Plus-Pol ringförmig ausgebildet sein und der Minus-Pol im Inneren des ringförmigen Plus-Pols angeordnet sein, wobei beide Pole ebenfalls voneinander elektrisch isoliert sind. Die Erfindung ist jedoch nicht auf Batterierundzellen beschränkt. Die Batteriezellen 1 können jede andere Form, z.B. viereckige Form usw. aufweisen, je nach Funktion und Einsatzzweck.

Die Figuren 2, 3 und 4 zeigen ein Ausführungsbeispiel eines erfindungsgemäßen Batteriemoduls 4, welches aus der Batteriezelle 1 gemäß Figur 1 und einer Batteriezellenverbindungseinrichtung 5 besteht. In Figur 2 ist das Batteriemodul 4 dabei in einer Explosionsdarstellung gezeigt. Figur 3 zeigt wiederum eine Draufsicht auf das Batteriemodul 4 und Figur 4 eine Perspektivansicht des Batteriemoduls 4. In Figur 5 ist eine Perspektivansicht und in Figur 6 ist eine Draufsicht eines Ausführungsbeispiels einer Batterievorrichtung 6 gezeigt, welche aus mehreren der in den Figuren 2 bis 4 gezeigten Batteriemodule 4 zusammengesetzt ist.

Die Batteriezellenverbindungseinrichtung 5, wie sie in den Figuren 2 bis 6 gezeigt ist, weist einen Rahmen 7 mit einer Aufnahme 8 an seiner Unterseite auf. Der Rahmen 7 mit seiner Aufnahme 8 besteht aus einem elektrisch leitfähigen Material oder einer elektrisch leitfähigen Materialkombination. Beispielsweise ist der Rahmen 7 mit seiner Aufnahme 8 aus Metall, wie z.B. Aluminium oder einer Aluminiumlegierung usw., hergestellt. Dabei kann der Rahmen 7 mit seiner Aufnahme 8, wie in den Figuren 2 bis 6, beispielsweise als Metallgussteil ausgebildet sein.

Die Aufnahme 8 an der Unterseite 9 des Rahmens 7 ist beispielsweise als Aufnahmehülse ausgebildet zum Aufnehmen eines Abschnitts der Batteriezelle 1 mit dem Minus-Pol 3 und dem Plus-Pol 2. Die Batteriezelle 1 ist dabei in der Aufnahme 8 und genauer in der Aufnahmehülse beispielsweise formschlüssig und/oder kraftschlüssig aufgenommen.

Im Falle der in dem Ausführungsbeispiel in den Figuren 1 bis 6 gezeigten Batterierundzelle als Batteriezelle 1, ist die Aufnahmehülse als zylindrische Aufnahmehülse ausgebildet zur Aufnahme des Abschnitts der zylindrisch geformten Batterierundzelle, welcher den Minus-Pol 3 und den Plus-Pol 2 aufweist. Die Batterierundzeller kann in der Aufnahmehülse beispielsweise formschlüssig und/oder kraftschlüssig aufgenommen werden.

Die Aufnahme 8 wird an dem ringförmigen Pol, hier dem Minus-Pol 3, und insbesondere an dem Umfang des ringförmigen Pols anschließend befestigt, beispielsweise durch Verschweißen, um eine elektrisch leitende Verbindung mit dem ringförmigen Pol, hier dem Minus-Pol 3, der Batteriezelle 1 bereitzustellen. Der Rahmen 7 mit der Aufnahme 8 bildet dadurch in dem Ausführungsbeispiel den Minus-Pol 3 der Batteriezelle 1 ab. Mit anderen Worten der Rahmen 7 mit der Aufnahme 8 bildet oder fungiert als Minus-Pol 3 der Batteriezellenverbindungseinrichtung 5.

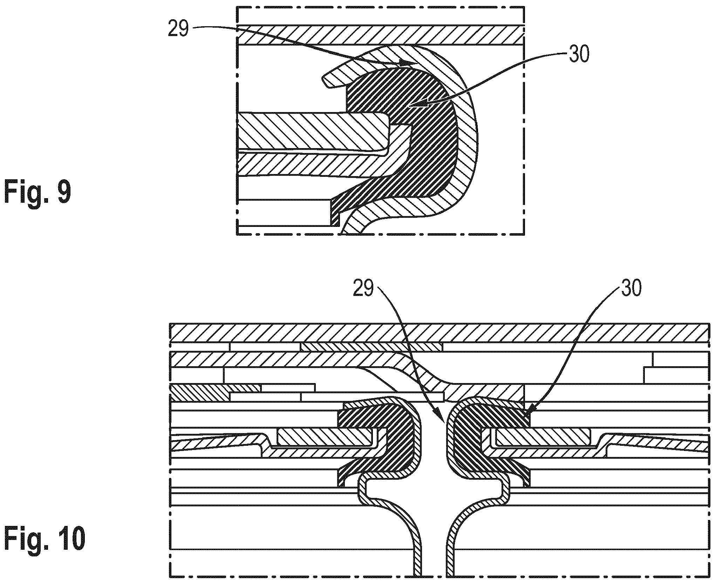

Wie in Figur 4 gezeigt ist, kann die Aufnahme 8 des Rahmens 7 der Batteriezellenverbindungseinrichtung 5 beispielsweise teilweise oder vollständig umlaufend mit dem ringförmigen Pol, hier dem Minus-Pol 3, der Batteriezelle 1, verschweißt werden, z.B. mittels Laserschweißen. In Figur 4 ist dabei die am Umfang der Aufnahme 8 umlaufende Schweißnaht 10 gezeigt, mit der die Aufnahme 8 mit dem Minus-Pol 3 der Batteriezelle 1 verbunden ist zum Bereitstellen einer elektrisch leitenden Verbindung zwischen dem Minus-Pol 3 und dem Rahmen 7 mit seiner Aufnahme 8. Das Verschweißen der Aufnahme 8 an dem Umfang des ringförmigen Minus-Pols 3 der Batteriezelle 1 hat den Vorteil einer hohen Prozesssicherheit, im Vergleich zu einem Verschweißen an der Bördelung einer Zellenkanne einer Batteriezelle, wie in den nachfolgenden Figuren 9 und 10 gezeigt ist.

Der Rahmen 7 weist des Weiteren eine Zugangsöffnung 11 am Ende der Aufnahme 8 auf, als Zugang zu dem anderen Pol, hier dem Plus-Pol 2, des in der Aufnahme 8 aufgenommenen Abschnitts der Batteriezelle 1. Der Plus-Pol 2 kann dabei als Batteriezellendeckel der Batteriezelle 1 vorgesehen sein, wie in Figur 2 angedeutet ist.

Zur elektrischen Kontaktierung des anderen Pols, hier des Plus-Pols 2, der Batteriezelle 1, weist die Batteriezellenverbindungseinrichtung 5 ein Laschenelement 12 aus einem elektrisch leitfähigen Material, beispielsweise aus Metall, z.B. Aluminium oder einer Aluminiumlegierung usw., auf. Das Laschenelement 12 ist mit einem Abschnitt an dem Rahmen 7, beispielsweise an der Oberseite 13 des Rahmens 7, elektrisch isolierend befestigt. Dazu ist das Laschenelement 12 an der Oberseite 13 des Rahmens 7 z.B. mittels eines elektrisch isolierenden Kunststoffs 14 angespritzt, um das Laschenelement 12 gegenüber dem Minus-Pol 3 der Batteriezelle 1 elektrisch zu isolieren. Je nach Funktion und Einsatzzweck können wahlweise weitere Abschnitte des Rahmens 7 mit dem elektrisch isolierenden Kunststoff 14 beschichtet sein, wie z.B. in den Figuren 2, 3 und 4 gezeigt ist.

Mit einem inneren Ende 15 ist das Laschenelement 12 an dem Pol, hier dem Plus-Pol 2, der Batteriezelle 1 elektrisch leitend befestigt. Dazu ist das Laschenelement 12 mit seinem inneren Ende 15 an dem Plus-Pol 3 beispielsweise angeschweißt, z.B. mittels Laserschweißens, zum Bereitstellen der elektrisch leitenden Verbindung des Laschenelements 12 mit dem Plus-Pol 2. In Figur 2 ist dabei der Schweißpunkt 16 des Laschenelements 12 mit dem Plus-Pol 2 gezeigt. Das Laschenelement 12 bildet somit den Plus-Pol 2 der Batteriezelle 1 ab. Mit anderen Worten, das Laschenelement 12 bildet oder fungiert als Plus-Pol der Batteriezellenverbindungseinrichtung 5. Der Plus-Pol und der Minus-Pol der Batteriezellenverbindungseinrichtung 5 sind dabei voneinander elektrisch isoliert durch die zusätzlich aufgebrachte elektrisch isolierende Schicht, z.B. in Form des elektrisch isolierenden Kunststoffs 14.

Das äußere Ende 16 des Laschenelements 12 kann, wie in den Figuren 2 bis 6 gezeigt ist, vorzugsweise über die Batteriezellenverbindungseinrichtung 5 bzw. dessen Rahmen 7 seitlich nach außen vorstehen zur elektrischen Kontaktierung des Rahmens 7 der Batteriezellenverbindungseinrichtung 5 eines benachbarten Batteriemoduls 4.

Das Laschenelement 12 kann dabei mit seinem äußeren Ende 17 beispielsweise auf einem nicht zusätzlich mit einer elektrischen Isolierung versehenen Bereich des als Minus-Pol fungierenden Rahmens 7 aufliegen, oder wahlweise zusätzlich an diesem elektrisch leitend befestigt sein. Dadurch kann das äußere Ende 17 des Laschenelements 12 den Rahmen 7 des benachbarten Batteriemoduls 4 elektrisch kontaktieren und so eine elektrische leitende Verbindung zwischen dem Plus-Pol 2 der Batteriezelle 1 und dem Minus-Pol 3 der benachbarten Batteriezelle 1 hergestellt werden.

Um zu verhindern, dass die beiden Rahmen 7, welche den Minus-Pol 3 der jeweiligen Batteriezelle 1 abbilden, sich ungewollt elektrisch kontaktieren, ist in dem Ausführungsbeispiel in den Figuren 5 und 6 ein Verbindungselement 18 zwischen den beiden Rahmen 7 der Batteriezellenverbindungseinrichtungen 5 aus einem elektrisch isolierenden Material oder einer elektrisch isolierenden Materialkombination vorgesehen. Das Verbindungselement 18 verhindert, dass die beiden Rahmen 7 direkt aneinander anstoßen und sich dadurch elektrisch kontaktieren können. Dieses Verbindungselement 18 ist mit dem jeweiligen Rahmen 7 verbunden, beispielsweise verschraubt, vernietet, verstiftet, verrastet, zusammengesteckt, verklemmt, verklebt und/oder verschweißt usw.. Die Erfindung ist auf die genannten Befestigungsverfahren zum Befestigen der Rahmen 7 und des Verbindungselements 18 aneinander nicht beschränkt. Es kann jede andere Art der Befestigung oder Kombination von Befestigungen vorgesehen werden, die geeignet ist bzw. sind, die Rahmen 7 und das Verbindungselement 18 aneinander zu befestigen. In dem in den Figuren 5 und 6 gezeigten Ausführungsbeispiel ist das Verbindungselement 18 mit dem Rahmen 7 der jeweiligen Batteriezellenverbindungseinrichtung 5 beispielsweise zusammengesteckt und zusätzlich verschraubt.

Mittels des jeweils elektrisch isolierenden Verbindungselements 18 zwischen den als Minus-Pol fungierenden Rahmen 7 der Batteriezellenverbindungseinrichtungen 5 der benachbarten Batteriemodule 4, können mehrere Batteriemodule 4 seriell, d.h. in Reihe geschaltet werden, wie in den Figuren 5 und 6 gezeigt ist.

Zum parallelen Verschaltung der Batteriezellen 1 zweier benachbarter Batteriemodule 4, werden die Rahmen 7 der benachbarten Batteriemodule 4, die jeweils den Minus-Pol 3 ihrer zugeordneten Batteriezelle 1 abbilden, miteinander in Kontakt gebracht und verbunden, beispielsweise zusammengesteckt und miteinander zusätzlich verschraubt. Das durch seine beiden als Minus-Pol fungierenden Rahmen 7 parallel geschalteten Batteriezellenpaar 1, 1 ist wiederum, wie in den Figuren 5 und 6 gezeigt ist, seriell, d.h. in Reihe, mit einem benachbarten Batteriezellenpaar 1, 1 geschaltet. Dazu sind, wie zuvor beschrieben, zwischen den beiden Batteriezellenpaaren 1, 1 und genauer ihren beiden Rahmenpaaren 7, 7, das elektrisch isolierende Verbindungselement 18 vorgesehen. Dieses elektrisch isolierende Verbindungselement 18 verbindet die Rahmenpaare 7,7 der beiden Batteriezellenpaare 1, 1, derart, dass die beiden Rahmenpaare 7, 7 voneinander elektrisch isoliert sind.

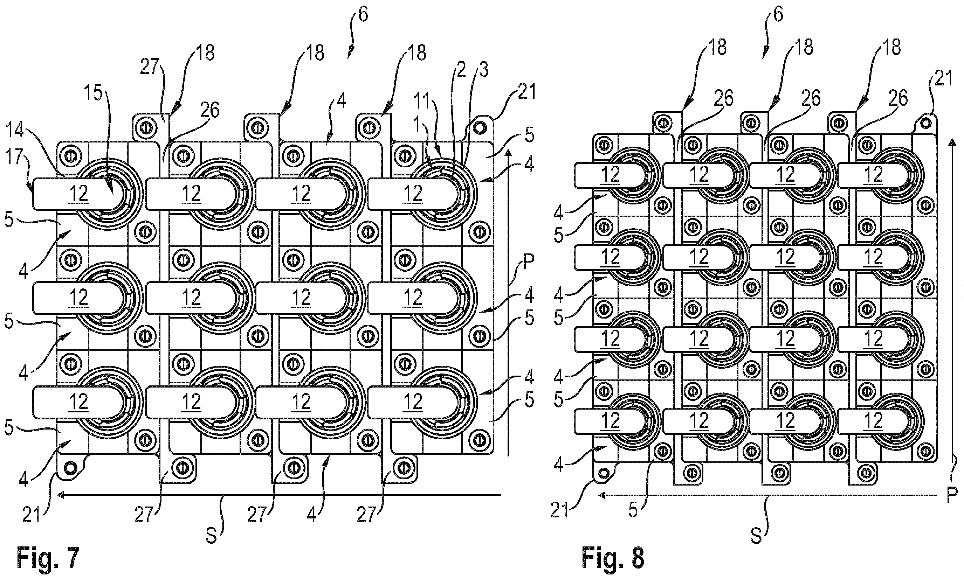

Auf diese Weise können die Batteriemodule 4 mit ihren Batteriezellen 1 und den zugeordneten Batteriezellenverbindungseinrichtungen 5 sehr einfach miteinander je nach Bedarf seriell, d.h. in Reihe, und/oder parallel miteinander zu einer Batterievorrichtung, wie z.B. der Batterievorrichtung 6 in den Figuren 5 und 6 oder den nachfolgenden Figuren 7 und 8 verschaltet werden.

In der in den Figuren 2 bis 4 gezeigten Ausführungsform der Batteriezellenverbindungseinrichtung 5 ist der Rahmen 7 z.B. viereckig und vorzugsweise mit einer im Wesentlichen planen oder ebenen Oberseite 13 ausgebildet. Der Rahmen 7 ist dabei derart ausgebildet, dass er an zwei gegenüberliegenden Seiten 19, 19' mit einem anderen Rahmen 7 eines weiteren Batteriemoduls 4 verbunden und parallel verschaltet werden kann, indem der Rahmen 7 mit dem anderen Rahmen 7 beispielsweise zusammengesteckt und wahlweise zusätzlich z.B. verschraubt wird.

Zum Verbinden der zwei Rahmen 7, 7 weist der jeweilige Rahmen 7 auf wenigstens einer Seite 19 an jeweils einem Enden 20 einen abgestuften Vorsprung 21 zum Einführen in eine dazu korrespondierende Aussparung 22 auf der gegenüberliegenden Seite des anderen Rahmens 7 auf. Des Weiteren weist der Rahmen 7 auf der Seite 19 an dem jeweils anderen Ende 23 eine Aussparung 22 zum Einführen eines dazu korrespondierenden abgestuften Vorsprungs 21 auf der gegenüberliegenden Seite des anderen Rahmens 7 auf. Um mehr als zwei Rahmen 7, 7 miteinander zu verbinden, weist der jeweilige Rahmen 7 auf zwei gegenüberliegenden Seiten 19 und 19' an jeweils zwei schräg einander gegenüberliegenden Enden den abgestuften Vorsprung 21 und an den beiden anderen einander schräg gegenüberliegenden Enden die Aussparung 22 auf. Die Aussparung 22 ist dabei korrespondierend zu dem in der Aussparung aufzunehmenden abgestuften Vorsprung 21 des anderen Rahmens 7 ausgebildet, so dass zwei miteinander verbundene und genauer zusammengesteckte Rahmen 7, 7, beispielsweise eine im Wesentlichen bündige Oberseite mit einer vorzugsweise ebenen oder planen Fläche bilden, wie in den Figuren 5 und 6 und den nachfolgenden Figuren 7 und 8 gezeigt ist. Zum zusätzlichen Verschrauben ist der jeweilige abgestufte Vorsprung 21 mit einer Gewindebohrung 24 versehen und die Aussparung 22 mit einer passenden Bohrung 25 oder ebenfalls einer passenden Gewindebohrung, so dass der in der Aussparung 22 des Rahmens 7 aufgenommene abgestufte Vorsprung 21 des anderen Rahmens 7 mit diesem verschraubt werden kann. Statt Verschrauben kann auch ein Verstiften oder Vernieten usw. der beiden Rahmen 7, 7 und ihrer Aussparungen 22 und abgestuften Vorsprünge 21 vorgesehen sein. Auf diese Weise können in einer Art Baukastenprinzip sehr einfach mehrere Batteriemodule 4 mit ihren Rahmen 7 miteinander verbunden werden und parallel verschaltet werden.

Des Weiteren kann das jeweilige Verbindungselement 18 dabei derart ausgebildet sein, dass es einen Steg 26 in Längsrichtung aufweist, welcher in montiertem Zustand zwischen den gegenüberliegenden Rahmen 7 der jeweiligen Batteriemodule 4 verläuft und diese voneinander trennt, um sie voneinander elektrisch zu isolieren. Zur Befestigung weist das Verbindungselement 18 an seinen beiden Längsenden jeweils auf beiden Seiten des Stegs 26 einen ersten und zweiten Befestigungsabschnitt 27, 28 auf, zur Befestigung der beiden äußersten an dem Steg 26 gegenüberliegenden Batteriemodule 4 und ihrer Rahmen 7, wie in den Figuren 5 und 6 gezeigt ist. Der erste Befestigungsabschnitt 27 ist dabei beispielsweise als umgekehrt abgestufter Vorsprung ausgebildet zu Auflage auf dem abgestuften Vorsprung 21 des Rahmens 7 des äußersten Batteriemoduls 4. Der umgekehrt abgestufte Vorsprung des Verbindungselements 18 bildet dabei mit der Oberseite 19 des Rahmens 7 beispielsweise eine plane oder ebene Fläche, wie in den Figuren 5 und 6 gezeigt ist. Der erste Befestigungsabschnitt 27 kann dabei mit dem abgestuften Vorsprung 21 des Rahmens 7 ebenfalls zusätzlich z.B. verschraubt, verstiftet oder vernietet werden usw.. Der zweite Befestigungsabschnitt 28 des Verbindungselements 18 ist als abgestufter Vorsprung ausgebildet zur Aufnahme in der Aussparung 22 des Rahmens 7 des äußersten Batteriemoduls 7 auf der anderen Seite des Stegs 26. Der zweite Befestigungsabschnitt 28 kann dabei mit dem Rahmen 7 und dessen Aussparung 22 ebenfalls zusätzlich z.B. verschraubt, verstiftet oder vernietet werden, wie in den Figuren 5 und 6 gezeigt ist.

Das in den Figuren 5 und 6 gezeigten Ausführungsbeispiel für eine Batterievorrichtung 6 weist beispielsweise eine 4S 2P Batteriezellenschaltung auf. Das bedeutet, dass bei den insgesamt acht Batteriezellen 1 je zwei Batteriezellen parallel verschaltet und vier dieser Batteriezellpaare seriell, also in Reihe, verschaltet sind.

Wie in Figur 6 gezeigt ist, ist die serielle Verschaltung der Batteriemodule 4 in horizontaler Richtung mit einem Pfeil S angedeutet und die parallele Verschaltung der Batteriemodule 4 in vertikaler Richtung mit einem Pfeil P angedeutet. Dies gilt entsprechend für die nachfolgenden Figuren 7 und 8.

In Figur 7 ist eine Draufsicht auf eine Batterievorrichtung 6 mit beispielsweise zwölf Batteriemodulen 4 gezeigt, wobei dabei Batteriemodule 4, wie sie in den Figuren 2 bis 4 gezeigt sind, eingesetzt werden. Die Batterievorrichtung in Figur 7 weist dabei beispielsweise eine 4S 3P Batteriezellenschaltung auf. Das bedeutet, dass bei den insgesamt zwölf Batteriezellen 1 je drei Batteriezellen 1 parallel verschaltet und vier dieser Batteriezellendreierpaare seriell, also in Reihe, verschaltet sind.

Des Weiteren ist in Figur 8 eine Draufsicht auf eine Batterievorrichtung 6 mit beispielsweise sechzehn Batteriemodulen 4 gezeigt, wobei dabei Batteriemodule 4, wie sie in den Figuren 2 bis 4 gezeigt sind, eingesetzt werden. Die Batterievorrichtung 6 in Figur 8 weist dabei beispielsweise eine 4S 4P Batteriezellenschaltung auf. Das bedeutet, dass bei den insgesamt sechzehn Batteriezellen 1 je vier Batteriezellen parallel verschaltet und vier dieser Batteriezellenviererpaare seriell, also in Reihe, verschaltet sind.

Mittels des erfindungsgemäßen Batteriemoduls 4 und des elektrisch isolierenden Verbindungselements 18 zum seriellen Verschalten von wenigstens zwei Batteriemodulen 4 kann eine Batterievorrichtung 6 mit beliebig vielen solcher Batteriemodulen 4 bereitgestellt werden und eine beliebige serielle und parallele Verschaltung von Batteriemodulen 4 der Batterievorrichtung 6 erzeugt werden, je nach Funktion und Einsatzzweck.

In Figur 9 ist, wie zuvor beschrieben, ein Ausschnitt einer Batteriezelle mit einer Zellkanne mit einer Bördelung 29, und in Figur 10 ein Ausschnitt zweier miteinander verbundener Batteriezellen mit einer jeweiligen Zellkanne mit einer Bördelung 29 gezeigt. Wie zuvor ausgeführt, hat das Verschweißen der Aufnahme der Batteriezellenverbindungseinrichtung an dem Umfang des ringförmigen Minus-Pols der Batteriezelle bei den in den Figuren 1 bis 8 gezeigten Batteriemodulen den Vorteil einer hohen Prozesssicherheit, im Vergleich zu einem Verschweißen an der Bördelung 29 einer Zellenkanne, wie in den n Figuren 9 und 10 gezeigt ist, die eine Silikondichtung 30 umgibt.

### Bezugszeichenliste

- 1: Batteriezelle
- 2: Plus-Pol
- 3: Minus-Pol
- 4: Batteriemodul
- 5: Batteriezellenverbindungseinrichtung
- 6: Batterievorrichtung
- 7: Rahmen
- 8: Aufnahme
- 9: Unterseite (Rahmen)
- 10: Schweißnaht
- 11: Zugangsöffnung (Rahmen)
- 12: Laschenelement
- 13: Oberseite (Rahmen)
- 14: Elektrisch isolierender Kunststoff
- 15: Inneres Ende (Laschenelement)
- 16: Schweißpunkt
- 17: Äußeres Ende (Laschenelement)
- 18: Verbindungselement
- 19, 19': Gegenüberliegende Seiten des Rahmens
- 21: Abgestufter Vorsprung
- 22: Aussparung
- 23: Ende
- 24: Gewindebohrung
- 25: Bohrung
- 26: Steg (Verbindungselement)
- 27: Erster Befestigungsabschnitt
- 28: Zweiter Befestigungsabschnitt
- 29: Bördelung an der Zellkanne
- 30: Silikondichtung

## Patentansprüche

1. Batteriezellenverbindungseinrichtung (5) zum elektrisch leitenden Verbinden mit einer einseitig gepolten Batteriezelle (1) mit einem ersten Pol (3) und einem zweiten Pol (2), wobei die Batteriezellenverbindungseinrichtung (5) aufweist:
einen elektrisch leitenden Rahmen (7) mit einer Aufnahme (8) zur Aufnahme eines Abschnitts der einseitig gepolten Batteriezelle (1) mit deren ersten und zweiten Pol (3, 2), wobei der Rahmen (7) mit dem ersten Pol (3) der Batteriezelle (1) elektrisch leitend verbindbar ausgebildet ist und einen Zugang (11) zum elektrischen Kontaktieren des zweiten Pols (2) der Batteriezelle (1) aufweist,
ein elektrisch leitendes Laschenelement (12), welches an dem Rahmen (7) befestigt und gegenüber dem Rahmen (7) elektrisch isoliert ist, wobei das Laschenelement (12) derart ausgebildet ist, den zweiten Pol (2) über den Zugang (11) des Rahmens (7) mit einem ersten Pol einer weiteren Batteriezelle und insbesondere eines Rahmens einer weiteren Batteriezellenverbindungseinrichtung elektrisch leitend zu verbinden.

2. Batteriezellenverbindungseinrichtung nach Anspruch 1, wobei der Rahmen (7) derart ausgebildet ist, dass er an wenigstens einer oder an wenigstens zwei Seiten (19, 19'), insbesondere wenigstens zwei einander gegenüberliegenden Seiten (19, 19'), mit einem weiteren Rahmen einer Batteriezellenverbindungseinrichtung elektrisch leitenden verbindbar ist, wobei der Rahmen (7) insbesondere derart ausgebildet ist an der jeweiligen Seite (19, 19') mit dem weiteren Rahmen mittels Verschrauben, Verstiften, Vernieten, Verschweißen, Zusammenstecken, Verrasten und/oder Verkleben verbindbar zu sein, insbesondere elektrisch leitend verbindbar zu sein.

3. Batteriezellenverbindungseinrichtung nach Anspruch 2, wobei der Rahmen (7) zur Befestigung eines Weiteren Rahmens an derjeweiligen Seite (19, 19') einen Befestigungsabschnitt (21, 22) aufweist mit dem der Rahmen (7) mit dem anderen Rahmen zusammensteckbar und vorzugsweise zusätzlich verschraubbar, verstiftbar, vernietbar, verschweißbar, verrastbar und/oder verklebbar ist, wobei der Befestigungsabschnitt (21, 22) zum Verstiften, Vernieten oder Verschrauben eine Bohrung (25) oder Gewindebohrung (24) aufweist.

4. Batteriezellenverbindungseinrichtung nach Anspruch 3, wobei der Befestigungsabschnitt einen abgestuften Vorsprung (21) aufweist, welcher seitlich an dem Rahmen (7) vorsteht und in einer zu dem abgestuften Vorsprung (21) korrespondierenden Aussparung des anderen Rahmens aufnehmbar oder einsteckbar ist, oder wobei der Befestigungsabschnitt eine an der Ober- oder Unterseite (13, 9) des Rahmens (7) ausgebildete Aussparung (22) aufweist, in welche ein dazu korrespondierender, abgestufter Vorsprung des anderen Rahmens aufnehmbar oder einsteckbar ist.

5. Batteriezellenverbindungseinrichtung nach einem der Ansprüche 1 bis 4, wobei der Rahmen (7) eine Zugangsöffnung (11) an einem oberen Ende der Aufnahme (8) aufweist, als Zugang zum elektrischen Kontaktieren des zweiten Pols (2) der in der Aufnahme (8) aufnehmbaren Batteriezelle (1), wobei das Laschenelement (12) ein inneres Ende (15) aufweist, mit dem das Laschenelement (12) elektrisch leitenden mit dem zweiten Pol (2) durch die Zugangsöffnung (11) verbindbar ist, insbesondere an dem zweiten Pol (2) anschweißbar ist, und wobei das Laschenelement (12) ein äußeres Ende (17) aufweist, mit dem das Laschenelement (12) seitlich über den Rahmen (7) nach außen vorsteht zur elektrischen Kontaktierung mit einem ersten Pol einer weiteren Batteriezelle und insbesondere eines mit dem Rahmen (7) verbundenen weiteren Rahmens einer weiteren Batteriezellenverbindungseinrichtung.

6. Batteriezellenverbindungseinrichtung (1) gemäß einem der Ansprüche 1 bis 5,
wobei die Aufnahme (8) als eine Aufnahmehülse ausgebildet ist für eine formschlüssige und/oder kraftschlüssige Aufnahme des Abschnitts der einseitig gepolten Batteriezelle (1) mit deren ersten und zweiten Pol (3, 2), wobei die Aufnahmehülse vorzugsweise an dem Umfang der Batteriezelle mit dem ersten Pol, insbesondere einem ringförmigen ersten Pol, zusätzlich verschweißbar ist zur Bereitstellung einer elektrisch leitenden Verbindung des Rahmens (7) mit dem ersten Pol.

7. Batteriemodul mit einer Batteriezellenverbindungseinrichtung (5) nach einem der vorstehenden Ansprüche, und einer einseitig gepolten Batteriezelle (1) mit einem ersten Pol (3) und einem zweiten Pol (2), wobei die Batteriezelle (1) mit dem Abschnitt mit den beiden Polen (3, 2) in der Aufnahme (8) des Rahmens (7) der Batteriezellenverbindungseinrichtung (5) aufgenommen und der Rahmen (7) den ersten Pol (3) elektrisch kontaktiert und das Laschenelement (12) den zweiten Pol (2) elektrisch kontaktiert.

8. Batteriemodul nach Anspruch 7, wobei die einseitig gepolte Batteriezelle (1) eine einseitig gepolte Batterierundzelle, insbesondere eine einseitig gepolte Hochvolt-Batterierundzelle ist, wobei der erste Pol (3) ringförmig ausgebildet ist und in innerhalb des ringförmigen ersten Pols (3) der zweite Pol (2) vorgesehen ist, wobei der erste und der zweite Pol (3, 2) voneinander elektrisch isoliert sind und wobei der erste Pol (3) ein Minus-Pol und der zweite Pol (2) ein Plus-Pol oder der erste Pol ein Plus-Pol und der zweite Pol ein Minus-Pol ist.

9. Batterievorrichtung, welche mehrere Batteriemodule gemäß einem der Ansprüche 7 oder 8 und wenigstens ein elektrisch isolierendes Verbindungselement (18) aufweist, wobei das elektrisch isolierende Verbindungselement (18) wenigstens zwei der Batteriemodule (4) derart miteinander verbindet, dass die Rahmen (7) der beiden Batteriemodule (4) voneinander elektrisch isoliert sind, wobei das Laschenelement (12) des einen Batteriemoduls (4) dabei mit seinem äußeren Ende (17) den Rahmen (7) des anderen Batteriemoduls (4) elektrisch kontaktiert, zur Bereitstellung einer seriellen Verschaltung der beiden Batteriemodule (4).

10. Batterievorrichtung nach Anspruch 9, wobei das elektrisch isolierende Verbindungselement (18) einen Steg (26) aufweist, welcher zwischen den beiden Rahmen (7) der seriell miteinander verschaltenden Batteriemodule (4) angeordnet ist und diese voneinander elektrisch isolierend trennt.

11. Batterievorrichtung nach Anspruch 9 oder 10, wobei das Verbindungselement (18) an seinen beiden Enden auf beiden Seiten des Stegs (26) einen zu dem Befestigungsabschnitt (21 22) des jeweiligen an dem Steg (26) vorgesehenen Rahmens (7) korrespondierenden Befestigungsabschnitt (27, 28) aufweist zum Anbinden an und Verbinden des Verbindungselements (26) mit dem jeweiligen Befestigungsabschnitt (21, 22) des Rahmens (7).

12. Verfahren zur Herstellung einer Batterievorrichtung (6) gemäß einem der Ansprüche 9 bis 11, mit den Schritten:
Bereitstellen von mehreren Batteriezellenverbindungseinrichtungen (5) nach einem der Ansprüche 1 bis 6 ,
Bereitstellen von den Batteriezellenverbindungseinrichtungen (5) zugeordneten, einseitig gepolten Batteriezellen (1),
Bereitstellen von wenigstens einem elektrisch isolierenden Verbindungselement (18),
Herstellen eines jeweiligen Batteriemoduls (4) durch Aufnehmen der jeweiligen Batteriezelle (1) mit dem Abschnitt mit den beiden Polen (3, 2) in der Aufnahme (8) des Rahmens (7) der zugeordneten Batteriezellenverbindungseinrichtung (5),
elektrisches Verbinden des ersten Pols (3) mit dem Rahmen (7),
elektrisches Verbinden des Laschenelements (12) mit dem zweiten Pol (2), wobei das Laschenelement (12) an dem zweiten Pol (2) vorzugsweise angeschweißt wird,
Bereitstellen einer seriellen Verschaltung von wenigstens zwei Batteriemodulen (4) durch Vorsehen des elektrisch isolierenden Verbindungselements (18) zwischen den wenigstens zwei Batteriemodulen (4) und elektrisch leitendes Verbinden des Laschenelements (12) des einen Batteriemoduls (4) mit dem Rahmen (5) des anderen Batteriemoduls (4), und/oder
Bereitstellen einer parallelen Verschaltung von wenigstens zwei Batteriemodulen (4) durch eine elektrisch leitende Befestigung der beiden Rahmen (5) der Batteriemodule (4) aneinander.

## Geänderte Patentansprüche

### Geänderte Patentansprüche gemäss Regel 137(2) EPÜ.

1. Batteriezellenverbindungseinrichtung (5) zum elektrisch leitenden Verbinden mit einer einseitig gepolten Batteriezelle (1) mit einem ersten Pol (3) und einem zweiten Pol (2), wobei die Batteriezellenverbindungseinrichtung (5) aufweist:
einen elektrisch leitenden Rahmen (7) mit einer Aufnahme (8) zur Aufnahme eines Abschnitts der einseitig gepolten Batteriezelle (1) mit deren ersten und zweiten Pol (3, 2), wobei der Rahmen (7) mit dem ersten Pol (3) der Batteriezelle (1) elektrisch leitend verbindbar ausgebildet ist und einen Zugang (11) zum elektrischen Kontaktieren des zweiten Pols (2) der Batteriezelle (1) aufweist,
ein elektrisch leitendes Laschenelement (12), welches an dem Rahmen (7) befestigt und gegenüber dem Rahmen (7) elektrisch isoliert ist, wobei das Laschenelement (12) derart ausgebildet ist, den zweiten Pol (2) über den Zugang (11) des Rahmens (7) mit einem ersten Pol einer weiteren Batteriezelle und insbesondere eines Rahmens einer weiteren Batteriezellenverbindungseinrichtung elektrisch leitend zu verbinden.

2. Batteriezellenverbindungseinrichtung nach Anspruch 1, wobei der Rahmen (7) zur elektrisch leitenden Befestigung eines Weiteren Rahmens an wenigstens einer oder an wenigstens zwei Seiten (19, 19'), insbesondere wenigstens zwei einander gegenüberliegenden Seiten (19, 19'), einen Befestigungsabschnitt (21, 22) aufweist, mit dem der Rahmen (7) mit dem anderen Rahmen zusammensteckbar und vorzugsweise zusätzlich verschraubbar, verstiftbar, vernietbar, verschweißbar, verrastbar und/oder verklebbar ist, wobei der Befestigungsabschnitt (21, 22) zum Verstiften, Vernieten oder Verschrauben eine Bohrung (25) oder Gewindebohrung (24) aufweist.

3. Batteriezellenverbindungseinrichtung nach Anspruch 2, wobei der Befestigungsabschnitt einen abgestuften Vorsprung (21) aufweist, welcher seitlich an dem Rahmen (7) vorsteht und in einer zu dem abgestuften Vorsprung (21) korrespondierenden Aussparung des anderen Rahmens aufnehmbar oder einsteckbar ist, oder wobei der Befestigungsabschnitt eine an der Ober- oder Unterseite (13, 9) des Rahmens (7) ausgebildete Aussparung (22) aufweist, in welche ein dazu korrespondierender, abgestufter Vorsprung des anderen Rahmens aufnehmbar oder einsteckbar ist.

4. Batteriezellenverbindungseinrichtung nach einem der Ansprüche 1 bis 3, wobei der Rahmen (7) eine Zugangsöffnung (11) an einem oberen Ende der Aufnahme (8) aufweist, als Zugang zum elektrischen Kontaktieren des zweiten Pols (2) der in der Aufnahme (8) aufnehmbaren Batteriezelle (1), wobei das Laschenelement (12) ein inneres Ende (15) aufweist, mit dem das Laschenelement (12) elektrisch leitenden mit dem zweiten Pol (2) durch die Zugangsöffnung (11) verbindbar ist, insbesondere an dem zweiten Pol (2) anschweißbar ist, und wobei das Laschenelement (12) ein äußeres Ende (17) aufweist, mit dem das Laschenelement (12) seitlich über den Rahmen (7) nach außen vorsteht zur elektrischen Kontaktierung mit einem ersten Pol einer weiteren Batteriezelle und insbesondere eines mit dem Rahmen (7) verbundenen weiteren Rahmens einer weiteren Batteriezellenverbindungseinrichtung.

5. Batteriezellenverbindungseinrichtung (1) gemäß einem der Ansprüche 1 bis 4, wobei die Aufnahme (8) als eine Aufnahmehülse ausgebildet ist für eine formschlüssige und/oder kraftschlüssige Aufnahme des Abschnitts der einseitig gepolten Batteriezelle (1) mit deren ersten und zweiten Pol (3, 2), wobei die Aufnahmehülse vorzugsweise an dem Umfang der Batteriezelle mit dem ersten Pol, insbesondere einem ringförmigen ersten Pol, zusätzlich verschweißbar ist zur Bereitstellung einer elektrisch leitenden Verbindung des Rahmens (7) mit dem ersten Pol.

6. Batteriemodul mit einer Batteriezellenverbindungseinrichtung (5) nach einem der vorstehenden Ansprüche, und einer einseitig gepolten Batteriezelle (1) mit einem ersten Pol (3) und einem zweiten Pol (2), wobei die Batteriezelle (1) mit dem Abschnitt mit den beiden Polen (3, 2) in der Aufnahme (8) des Rahmens (7) der Batteriezellenverbindungseinrichtung (5) aufgenommen und der Rahmen (7) den ersten Pol (3) elektrisch kontaktiert und das Laschenelement (12) den zweiten Pol (2) elektrisch kontaktiert.

7. Batteriemodul nach Anspruch 6, wobei die einseitig gepolte Batteriezelle (1) eine einseitig gepolte Batterierundzelle, insbesondere eine einseitig gepolte Hochvolt-Batterierundzelle ist, wobei der erste Pol (3) ringförmig ausgebildet ist und in innerhalb des ringförmigen ersten Pols (3) der zweite Pol (2) vorgesehen ist, wobei der erste und der zweite Pol (3, 2) voneinander elektrisch isoliert sind und wobei der erste Pol (3) ein Minus-Pol und der zweite Pol (2) ein Plus-Pol oder der erste Pol ein Plus-Pol und der zweite Pol ein Minus-Pol ist.

8. Batterievorrichtung, welche mehrere Batteriemodule gemäß einem der Ansprüche 6 oder 7 und wenigstens ein elektrisch isolierendes Verbindungselement (18) aufweist, wobei das elektrisch isolierende Verbindungselement (18) wenigstens zwei der Batteriemodule (4) derart miteinander verbindet, dass die Rahmen (7) der beiden Batteriemodule (4) voneinander elektrisch isoliert sind, wobei das Laschenelement (12) des einen Batteriemoduls (4) dabei mit seinem äußeren Ende (17) den Rahmen (7) des anderen Batteriemoduls (4) elektrisch kontaktiert, zur Bereitstellung einer seriellen Verschaltung der beiden Batteriemodule (4).

9. Batterievorrichtung nach Anspruch 8, wobei das elektrisch isolierende Verbindungselement (18) einen Steg (26) aufweist, welcher zwischen den beiden Rahmen (7) der seriell miteinander verschaltenden Batteriemodule (4) angeordnet ist und diese voneinander elektrisch isolierend trennt.

10. Batterievorrichtung nach Anspruch 8 oder 9, wobei das Verbindungselement (18) an seinen beiden Enden auf beiden Seiten des Stegs (26) einen zu dem Befestigungsabschnitt (21 22) des jeweiligen an dem Steg (26) vorgesehenen Rahmens (7) korrespondierenden Befestigungsabschnitt (27, 28) aufweist zum Anbinden an und Verbinden des Verbindungselements (26) mit dem jeweiligen Befestigungsabschnitt (21, 22) des Rahmens (7).

11. Verfahren zur Herstellung einer Batterievorrichtung (6) gemäß einem der Ansprüche 8 bis 9, mit den Schritten:
Bereitstellen von mehreren Batteriezellenverbindungseinrichtungen (5) nach einem der Ansprüche 1 bis 6,
Bereitstellen von den Batteriezellenverbindungseinrichtungen (5) zugeordneten, einseitig gepolten Batteriezellen (1),
Bereitstellen von wenigstens einem elektrisch isolierenden Verbindungselement (18),
Herstellen eines jeweiligen Batteriemoduls (4) durch Aufnehmen der jeweiligen Batteriezelle (1) mit dem Abschnitt mit den beiden Polen (3, 2) in der Aufnahme (8) des Rahmens (7) der zugeordneten Batteriezellenverbindungseinrichtung (5),
elektrisches Verbinden des ersten Pols (3) mit dem Rahmen (7),
elektrisches Verbinden des Laschenelements (12) mit dem zweiten Pol (2), wobei das Laschenelement (12) an dem zweiten Pol (2) vorzugsweise angeschweißt wird,
Bereitstellen einer seriellen Verschaltung von wenigstens zwei Batteriemodulen (4) durch Vorsehen des elektrisch isolierenden Verbindungselements (18) zwischen den wenigstens zwei Batteriemodulen (4) und elektrisch leitendes Verbinden des Laschenelements (12) des einen Batteriemoduls (4) mit dem Rahmen (5) des anderen Batteriemoduls (4), und/oder
Bereitstellen einer parallelen Verschaltung von wenigstens zwei Batteriemodulen (4) durch eine elektrisch leitende Befestigung der beiden Rahmen (5) der Batteriemodule (4) aneinander.
